# EUROPÄISCHE PATENTSCHRIFT

(11) **EP 2 181 021 B1**
(45) Veröffentlichungstag und Bekanntmachung des Hinweises auf die Patenterteilung: **02.11.2011**
(21) Anmeldenummer: 08803168.7
(22) Anmeldetag: 22.08.2008
(51) Int. Cl.: B60R 22/46

(54) **ANTRIEBSEINRICHTUNG ZUR ERZEUGUNG EINER GURTSTRAFFBEWEGUNG IN EINER SICHERHEITSGURTVORRICHTUNG**
DRIVE DEVICE TO GENERATE A BELT-TIGHTENING MOVEMENT IN A SAFETY BELT APPARATUS
DISPOSITIF D'ENTRAÎNEMENT POUR EXERCER UNE TENSION DE LA SANGLE D'UN SYSTÈME DE CEINTURE DE SÉCURITÉ

(30) Priorität: 23.08.2007 DE 102007040254
(43) Veröffentlichungstag der Anmeldung: 05.05.2010
(73) Patentinhaber: Adomeit, Heinz-Dieter, 10623 Berlin (DE); Chris Cintos De Segurança LTDA, São Paulo 04768-000 SP (BR)
(72) Erfinder: JULIA SENAR, David, 46530 Puzol Valencia (ES); ADOMEIT, Julius, 10961 Berlin (DE)
(74) Vertreter: Manasse, Uwe
(86) Internationale Anmeldenummer: PCT/EP2008/061042
(87) Internationale Veröffentlichungsnummer: WO 2009/024616

(56) Entgegenhaltungen:
- DE-A1- 2 931 164
- DE-A1- 10 325 583
- GB-A- 2 325 896

## Beschreibung

Die Erfindung betrifft eine Antriebseinrichtung zur Erzeugung einer Gurtstraffbewegung in einer Sicherheitsgurtvorrichtung gemäß dem Oberbegriff des Anspruchs 1. Ferner betrifft die Erfindung Sicherheitsgurtvorrichtungen bei denen derartige Antriebseinrichtungen zum Einsatz kommen.

Moderne Sicherheitssysteme für Kraftfahrzeuge weisen Sicherheitsgurtvorrichtungen mit einer Gurtstrafffunktion auf. Diese Funktionalität sieht vor, dass der Sicherheitsgurt einer angeschnallten Person nach dem Detektieren einer Unfallsituation gestrafft wird. Dazu wird eine Spule, mittels der der Sicherheitsgurt in einer Aufwickelrichtung aufrollbar und in einer Abwickelrichtung abrollbar vorgehalten wird, ein Stück weit in die Aufwickelrichtung angetrieben und generiert somit die gewünschte Gurtstraffbewegung. Auf diese Weise wird eine möglicherweise vorhandene Gurtlose beseitigt bzw. reduziert, damit der Sicherheitsgurt seine Rückhaltefunktion gegenüber der angeschnallten Person optimal ausüben kann.

Oftmals sind derartige Sicherheitsgurtvorrichtungen zusätzlich mit einer Lastbegrenzungseinrichtung versehen. Diese kann beispielsweise als ein mit der Drehachse der Spule zusammenwirkender Torsionsstab ausgebildet sein. Durch das Tordieren des Torsionsstabes lässt sich für die in der Unfallsituation blockierte Spule eine Spulendrehung in Abwickelrichtung mit definierter Kraft-Bewegungskennlinie realisieren. Auf diese Weise werden die über den Sicherheitsgurt auf die angeschnallte Person wirkenden Spitzenbelastungen reduziert, wenn diese trägheitsbedingt in den Sicherheitsgurt fällt.

Nach dem Eintritt einer Unfallsituation wird die Spule des Sicherheitsgurtes in Aufwickelrichtung angetrieben. Aus verschiedenen Gründen kann es vorkommen, dass die Gurtstraffbewegung der Spule gar nicht oder nicht vollständig ausgeführt wird. Einerseits ist es möglich, dass die Gurtlose praktisch nicht vorhanden oder sehr klein ist. In einem solchen Fall wäre die für die Gurtstraffbewegung vorgesehene Antriebskraft nicht ausreichend oder nach kurzer Zeit nicht mehr ausreichend, um die Spule in Aufwickelrichtung zu drehen. Dies kann beispielsweise dadurch begründet sein, dass eine nach dem Beseitigen der Gurtlosen am Sicherheitsgurt angreifende Gegenkraft größer oder gleich der Antriebskraft wird. Antriebskraft und Gegenkraft stellen in einer Unfallsituation ein einander entgegen gesetztes Kräftepaar dar, das abhängig vom Kräfteverhältnis die Bewegung des Sicherheitsgurtes in Auf- und in Abwickelrichtung über den Zeitablauf des Unfalls bestimmt.

Die Antriebskraft wird durch eine Straffeinrichtung bereitgestellt, die eine Antriebseinrichtung mit Antriebselementen, eine Beschleunigungseinrichtung zur Beschleunigung der Antriebselemente und einen Führungskanal zur Führung der beschleunigten Antriebselemente umfasst. Dabei ist eine Mehrzahl entlang einer Erstreckungsrichtung aufgereihter Antriebselemente vorgesehen, wobei die Antriebselemente an ihren Endabschnitten Gelenkeinrichtungen aufweisen und entlang der Erstreckungsrichtung benachbarte Antriebselemente über ihre benachbarten Gelenkeinrichtungen miteinander in mechanischer Wirkverbindung stehen. Die aneinander gereihten Antriebselemente bilden somit ein kettenartiges Gebilde, das sich im Führungskanal bewegen lässt.

Eine Mehrzahl von Gelenkeinrichtungen ist derart ausgebildet und weist einen quer zur Erstreckungsrichtung orientierten Kraftübertragungsbereich auf, dass sich bei einer Bewegung eines Antriebselementes in Richtung eines benachbarten Antriebselementes eine Schubkraft mittels des Kraftübertragungsbereichs zumindest teilweise auf das benachbarte Antriebselement überträgt und dass sich bei einer Bewegung eines Antriebselementes weg von einem benachbarten Antriebselement die benachbarten Gelenkeinrichtungen voneinander lösen. Eine derartige Ausbildung der Gelenkeinrichtungen, die im Folgenden auch als einseitige Kopplung der Antriebselemente der Antriebseinrichtung bezeichnet wird, sorgt dafür, dass sich die Antriebselemente in einer Antriebsrichtung als kettenartige Einheit durch den Führungskanal schieben lassen und somit eine Schubkraft übertragen können. Die Bewegung der beschleunigten Antriebselemente im Führungskanal wird dann dazu genutzt, die Spule in Rotation zu versetzen und somit die Gurtstraffbewegung des zu straffenden Sicherheitsgurtes zu generieren.

Aus der DE 195 12 660 C2 ist eine entsprechende Sicherheitsgurtvorrichtung bekannt. Die Antriebselemente sind als Kugeln ausgebildet. Bei der in der Figur 3 der DE 195 12 660 C2 gezeigten Ausführungsform sind die Kugeln durch eine Zwischeneinlage aus Graphitlamellen beabstandet. Die Graphitlamellen bilden zusammen mit den die Graphitlamellen kontaktierenden Abschnitten der Kugeloberflächen die Gelenkeinrichtungen zur mechanischen Kopplung der hintereinander angeordneten Antriebselemente.

Die aus der DE 195 12 660 C2 bekannte Antriebseinrichtung mit kugelförmigen Antriebselementen weist den Nachteil auf, dass die Gelenkeinrichtung zusätzlich zu den entsprechenden Abschnitten der kugelförmigen Antriebselemente als Zwischenlage ausgebildete Graphitlamellen aufweist. Dieser mehrteilige Aufbau erhöht die Kosten und den Montageaufwand.

Aus der WO 2005/066001 A1 ist eine Sicherheitsgurtvorrichtung mit einem Gurtstraffmechanismus bekannt, bei der die Antriebseinrichtung ebenfalls aus einer Mehrzahl von Antriebselementen aufgebaut ist. Anders als bei der DE 195 12 660 C2 weisen die Gelenkeinrichtungen neben den Antriebselementen jedoch keine separat ausgebildeten Bauteile auf. Die Gelenkeinrichtungen liegen als integrale Bestandteile der Antriebselemente in Form von Oberflächenabschnitten benachbarter Antriebselemente vor. Jede der drei in der WO 2005/066001 A1 gezeigten Varianten der Antriebseinrichtungen ist mit seinen Antriebselementen zum mechanischen Zusammenwirken mit einem als Zahnrad ausgebildeten Antriebsrad vorgesehen. Der über die Gelenkeinrichtungen mechanisch gekoppelte Strang der Antriebselemente übergreift jeden Zahn des Antriebsrades in axialer Richtung gesehen jeweils beidseitig und mit zwei in Erstreckungsrichtung benachbarten Antriebselementen. Dadurch ist eine gewisse Breite der Antriebselemente in axialer Richtung des Antriebsrades zwingend erforderlich. Außerdem muss jedes Antriebselement im Bereich der Gelenkeinrichtung quer zur Erstreckungsrichtung der Antriebseinrichtung betrachtet einen Rücksprung zur Aufnahme eines Zahns des Antriebsrades aufweisen. Dadurch kann im Bereich des Rücksprunges kein Kraftübertragungsbereich zur Übertragung der Schubkraft zwischen den Antriebselementen ausgebildet sein.

Aus der GB 2 325 896 ist ferner ein Gurtstraffer mit einem Antriebsrad und einer Kette aus das Antriebsrad treibenden Massekörpern bekannt. In einer Ausführungsform des bekannten Gurtstraffers sind die Massekörper der Kette zunächst mittels eines Bandes miteinander verbunden. Beim Durchlaufen des Antriebsrades schneidet das Antriebsrad das Band zwischen jeweiligen Massekörpern, um so die Massekörper voneinander zu trennen.

DE 29 31 164 A beschreibt eine Antriebseinrichtung gemäß der Oberbegriff des Anspruchs 1.

Der vorliegenden Erfindung liegt somit die Aufgabe zu Grunde, eine Antriebseinrichtung zur Erzeugung einer Gurtstraffbewegung in einer Sicherheitsgurtvorrichtung bereitzustellen, die eine verbesserte Übertragung der Schubkraft zwischen den Antriebselementen gewährleistet und gleichzeitig möglichst einfach und kostengünstig herstellbar ist.

Diese Aufgabe wird durch eine Antriebseinrichtung mit den Merkmalen den Anspruchs 1 gelöst.

Erfindungsgemäß ist vorgesehen, dass jede Gelenkeinrichtung einen einzigen, zusammenhängenden Kraftübertragungsbereich aufweist.

Die Übertragung einer Schubkraft zwischen zwei benachbarten Antriebselementen ist dadurch optimiert, dass nur ein einziger Kraftübertragungsbereich vorgesehen ist. Dieser lässt sich in seiner Struktur für die dynamischen Anforderungen der Antriebseinrichtung in einer Unfallsituation optimieren. Bevorzugt ist ein einziger Kraftübertragungsbereich als Merkmal derart ausgebildet, dass der Kraftübertragungsbereich als eine einzige zusammenhängende Linie oder als eine einzige zusammenhängende Oberfläche in Form einer einheitlichen Fläche oder einer Linie ohne Unterbrechungen ausgebildet ist.

Die Antriebselemente weisen eine Antriebselementbreite quer zur Erstreckungsrichtung der Antriebseinrichtung auf. Die Antriebselementbreite entspricht üblicherweise mindestens einem der Durchmesser eines Führungskanals durch den die gekoppelten Antriebselemente als Antriebseinrichtung bewegbar sind.

Für sämtliche Varianten der Antriebseinrichtung ist es von Vorteil, eine Mehrzahl der Antriebselemente im Wesentlichen identisch auszubilden, um die Wirtschaftlichkeit bei der Herstellung der Antriebseinrichtung zu erhöhen.

Eine erste Gruppe von Ausführungsformen der Antriebseinrichtung sieht vor, dass sich der Kraftübertragungsbereich der Gelenkeinrichtung im Wesentlichen entlang der gesamten Antriebselementbreite erstreckt. Durch das Ausnutzen der gesamten Antriebselementbreite für den Kraftübertragungsbereich können Kontaktflächen zwischen den Antriebselementen maximiert werden, um dadurch eine besonders zuverlässige und robuste Kraftübertragung zu gewährleisten.

Für diese erste Gruppe von Ausführungsformen der Antriebseinrichtung ist bevorzugt vorgesehen, dass die Gelenkeinrichtung an einem ersten Endabschnitt des Antriebselementes eine konkav ausgeformte Aufnahmefläche und die Gelenkeinrichtung an einem zweiten Endabschnitt des Antriebselementes eine konvex ausgeformte Gelenkfläche derart aufweist, dass die konvexe Gelenkfläche eines Antriebselementes in der konkaven Aufnahmefläche eines benachbarten Antriebselementes abrollt, wenn zumindest eines der mechanisch kontaktierten Antriebselemente quer zur Erstreckungsrichtung der Antriebseinrichtung verschwenkt. Unter der gleichzeitigen Ausnutzung der Antriebselementbreite für den Kraftübertragungsbereich ist auf diese Weise eine robuste mechanische Kopplung der Antriebselemente realisiert.

Mit Vorteil sieht diese erste Gruppe der Antriebseinrichtungen des weiteren vor, dass die konvexe Gelenkfläche und die konkave Aufnahmefläche ausschließlich um eine gleiche Raumrichtung quer zur Erstreckungsrichtung der Antriebseinrichtung derart gewölbt sind, dass sich benachbarte Antriebselemente um eine oder um mehrere parallel zur Raumrichtung orientierte Schwenkachsen bewegen, wenn die Antriebselemente zueinander verschwenken. Auf diese Weise lässt sich eine Ebene festlegen, in der sich die Antriebselemente entlang ihrer Erstreckungsrichtung unter verschieden starken Krümmungen der Erstreckungsrichtung bewegen lassen. Dadurch dass die Raumrichtung der Krümmung für die konvexe Gelenkfläche und die konkave Aufnahmefläche für eine Mehrzahl von Antriebselementen festgelegt ist, ist die Verschwenkbewegung der Antriebseinrichtung im Wesentlichen auf eine gemeinsame Ebene eingeschränkt. Ebenso ist denkbar, durch eine zumindest abschnittsweise Krümmung der konvexen Gelenkfläche und/oder der konkaven Aufnahmefläche um mehr als eine Raumrichtung, ein definiertes Spiel der Gelenkeinrichtungen zu realisieren. Dadurch lassen sich die Antriebselemente auf einer Bahn führen, die um mehr als eine Raumrichtung gekrümmt verläuft.

Diese erste Gruppe der Antriebseinrichtung zeichnet sich weiterhin mit Vorteil dadurch aus, dass die konvexe Gelenkfläche und die konkave Aufnahmefläche des Antriebselementes spiegelsymmetrisch zu einer Längsebene ausgebildet sind, die durch die Schwenkachse und durch die Erstreckungsrichtung des Antriebselementes aufgespannt ist. Dabei teilt die gedachte Linie der Erstreckungsrichtung das Antriebselement in Längsrichtung in zwei Hälften.

Zusätzlich ist bevorzugt vorgesehen, dass die konvexe Gelenkfläche und die konkave Aufnahmefläche jeweils Zylindermantelabschnitte aufweisen. Diese Zylindermantelabschnitte weisen jeweils definierte Krümmungsradien auf. Sind die Krümmungsradien im Wesentlichen gleich, so sind die Zylindermantelabschnitte der konvexen Gelenkfläche und der konkaven Aufnahmefläche im Wesentlichen identisch ausgebildet, so lässt sich die Verschwenkbewegung zwischen benachbarten Antriebselementen auf eine reine Rotationsbewegung ohne translatorischen Anteil einschränken. Weist die Aufnahmefläche einen größeren Krümmungsradius auf als die Gelenkfläche, so lässt sich eine Überlagerung von rotatorischen und translatorischen Bewegungsanteilen realisieren.

Die Ausbildung der Oberflächen der konvexen Gelenkfläche und der konkaven Aufnahmefläche lässt sich im Hinblick auf die aufeinander abgestimmte Größe und den zweidimensionalen Krümmungsverlauf in weiten Bereichen variieren. Dadurch können die räumlichen Freiheitsgrade der Verschwenkbarkeit der über die Gelenkeinrichtungen aneinander gekoppelten Antriebselemente wie benötigt eingestellt werden.
Bei einer ersten Ausführungsform der ersten Gruppe der Antriebseinrichtung, weisen die Gelenkeinrichtungen quer zur Erstreckungsrichtung der Antriebseinrichtung betrachtet einen im Wesentlichen runden oder ovalförmigen Querschnitt auf. Dieser Querschnitt stellt üblicherweise auch die Antriebselementbreite dar, über die sich der Kraftübertragungsbereich erstreckt. Ein Führungskanal für diese Ausführungsform der Antriebseinrichtung ist dann als Rohr mit einem runden oder ovalen Querschnitt ausgebildet.

Bei einer zweiten Ausführungsform der ersten Gruppe der Antriebseinrichtungen, weisen die Gelenkeinrichtungen quer zur Erstreckungsrichtung der Antriebseinrichtung betrachtet einen im Wesentlichen rechteckigen Querschnitt auf. Als rechteckig würde hier als Spezialfall auch ein quadratischer Querschnitt zählen, bei dem die beiden orthogonal zueinander orientierten Querschnittsmaße identisch zueinander sind. Entsprechend ist ein zugehöriger Führungskanal mit rechteckigem Querschnitt ausgeführt. Der Kraftübertragungsbereich erstreckt sich entlang der Breite einer der beiden Querschnittsmaße.

Für die gesamte erste Gruppe der Ausführungsformen der Antriebseinrichtung ist vorgesehen, dass sich die Ausdehnung eines Antriebselementes quer zur Erstreckungsrichtung betrachtet zwischen den beiden Gelenkeinrichtungen in einem Rücksprung verjüngt. Dieser Rücksprung weist mindestens einen Antriebsbereich des Antriebselementes auf, wobei der Antriebsbereich des Antriebselementes zum mechanischen Zusammenwirken mit mindestens einem korrespondierenden Antriebsbereich eines Antriebsrades einer Sicherheitsgurtvorrichtung dient. Auf diese Weise sind bei den Antriebselementen Gelenkeinrichtungen und Antriebsbereiche räumlich derart voneinander beabstandet, dass die Kraftübertragungsbereiche der Gelenkeinrichtungen in ihrer Ausgestaltung unbeeinflusst von den Antriebsbereichen sind. Dadurch lassen sich die Kraftübertragungsbereiche und die Antriebsbereiche unabhängig voneinander in ihrer jeweiligen Funktion optimieren.

Die Antriebseinrichtung mit einem nur einseitig ausgebildeten Rücksprung weist Antriebselemente auf, die auf der dem Rücksprung gegenüber liegenden Seite im Wesentlichen flach ausgebildet sind. Dadurch lässt sich die Antriebseinrichtung quer zur Erstreckungsrichtung orientiert besonders schmal ausbilden, wodurch sich der gesamte Bauraum einer Sicherheitsgurtvorrichtung in axialer Richtung der Spule für den Gurt weiter reduzieren lässt.

Die Erfindung sieht vor, dass der Rücksprung des Antriebselements zwei Antriebsbereiche umfasst, die spiegelsymmetrisch derart zueinander angeordnet sind, dass das Antriebselement von zwei entgegen gesetzten Richtungen aus betrachtet eine spiegelbildlich identische Struktur aufweist. Dadurch ist es möglich, die Gelenkeinrichtungen derart auszubilden, dass sich die Antriebselemente gleichermaßen gut im Uhrzeigersinn als auch gegen den Uhrzeigersinn gegeneinander verschwenken lassen. Somit können gleich aufgebaute Antriebseinrichtungen mit einseitig vorgesehenen Antriebsbereichen bei einer zweiseitig gurtstraffend wirkenden Sicherheitsgurtvorrichtung zum Einsatz kommen.

Die vorliegende Erfindung betrifft weiterhin verschiedene Ausführungsformen von Sicherheitsgurtvorrichtungen gemäß den abhängigen Ansprüchen.

Für sämtliche Ausführungsformen der Sicherheitsgurtvorrichtung ist es vorteilhaft, wenn die Straffeinrichtung ein plattenförmiges Abschlusselement umfasst, welches an der der Spule abgewandten Seite des Antriebsrades angeordnet ist und eine Wandung der Antriebsbereiche des Antriebsrades bildet. Hierdurch wird das Antriebsrad stabiler. Ferner wird bei Betätigung der Sicherheitsgurtvorrichtung durch das plattenförmige Abschlusselement erreicht, dass die zum Beschleunigen der Antriebselemente erzeugten Gase möglichst lange entlang der Beschleunigungsrichtung des Antriebsrades strömen und nicht seitlich entweichen.

Weitere Merkmale und Eigenschaften der Antriebseinrichtung werden im Zusammenhang mit der nachfolgenden Beschreibung einiger bevorzugter Ausführungsbeispiele verdeutlicht.

Es zeigen:
- Figur 1: eine perspektivische Ansicht einer Antriebseinrichtung die nicht unter den Wortlaut des Anspruchs 1 fällt;
- Figur 2: die Antriebseinrichtung aus Figur 1 als Bestandteil einer Sicherheitsgurtvorrichtung;
- Figur 3: eine Seitenansicht des ersten Antriebselements der Antriebseinrichtung aus Figur 1;
- Figur 4: eine perspektivische Aufsicht auf das erste Antriebselement aus Figur 3;
- Figur 5: eine perspektivische Untersicht des ersten Antriebselements aus Figur 3;
- Figur 6: eine Seitenansicht eines Antriebselementes aus der Antriebseinrichtung aus Figur 1;
- Figur 7: eine perspektivische Ansicht des Antriebselementes aus Figur 6;
- Figur 8: eine perspektivische Untersicht des Antriebselementes aus Figur 6
- Figur 9: eine perspektivische Ansicht einer Antriebseinrichtung als zweite Variante die nicht unter dem Wortlant des Anspruchs 1 fällt.
- Figur 10: die Antriebseinrichtung aus Figur 9 als Bestandteil einer Sicherheitsgurtvorrichtung;
- Figur 11: eine Seitenansicht des ersten Antriebselements aus Figur 9;
- Figur 12: eine perspektivische Aufsicht auf das erste Antriebselement aus Figur 11;
- Figur 13: eine perspektivische Untersicht auf das erste Antriebselement aus Figur 11;
- Figur 14: eine Seitenansicht auf ein Antriebselement aus Figur 9;
- Figur 15: eine perspektivische Aufsicht auf das Antriebselement aus Figur 14;
- Figur 16: eine weitere perspektivische Aufsicht auf das Antriebselement aus Figur 14
- Figur 17: eine perspektivische Ansicht einer ersten Variante aus der ersten Gruppe der Antriebseinrichtungen;
- Figur 18: die Antriebseinrichtung aus Figur 17 als Bestandteil einer Sicherheitsgurtvorrichtung ;
- Figur 19: eine Seitenansicht des ersten Antriebselementes der Antriebseinrichtung aus Figur 17;
- Figur 20: eine Ansicht der Rückseite des ersten Antriebselementes aus Figur 19;
- Figur 21: eine perspektivische Seitenansicht des ersten Antriebselementes aus Figur 19;
- Figur 22: eine Seitenansicht eines Antriebselementes der Antriebseinrichtung aus Figur 17;
- Figur 23: eine Ansicht der Rückseite des ersten Antriebselementes aus Figur 22
- Figur 24: eine perspektivische Seitenansicht des ersten Antriebselementes aus Figur 22;
- Figur 25: eine perspektivische Ansicht der Ausführungsform aus der ersten Gruppe der Antriebseinrichtungen;
- Figur 26: die Antriebseinrichtung aus Figur 25 im Zusammenhang mit der Spule einer Sicherheitsgurtvorrichtung;
- Figur 27: eine Seitenansicht des ersten Antriebselements der Antriebseinrichtung aus Figur 25;
- Figur 28: eine Seitenansicht der Rückseite des ersten Antriebselements aus Figur 27;
- Figur 29: eine perspektivische Seitenansicht des ersten Antriebselements aus Figur 27;
- Figur 30: eine Seitenansicht eines Antriebselements der Antriebseinrichtung aus Figur 25;
- Figur 31: eine Seitenansicht der Rückseite des Antriebselements aus Figur 30;
- Figur 32: eine perspektivische Seitenansicht des Antriebselements aus Figur 30 und
- Figur 33: einen vergrößerten Endabschnitt einer Antriebseinrichtung mit einem alternativen Dichtungselement angeordnet in einem Führungskanal.

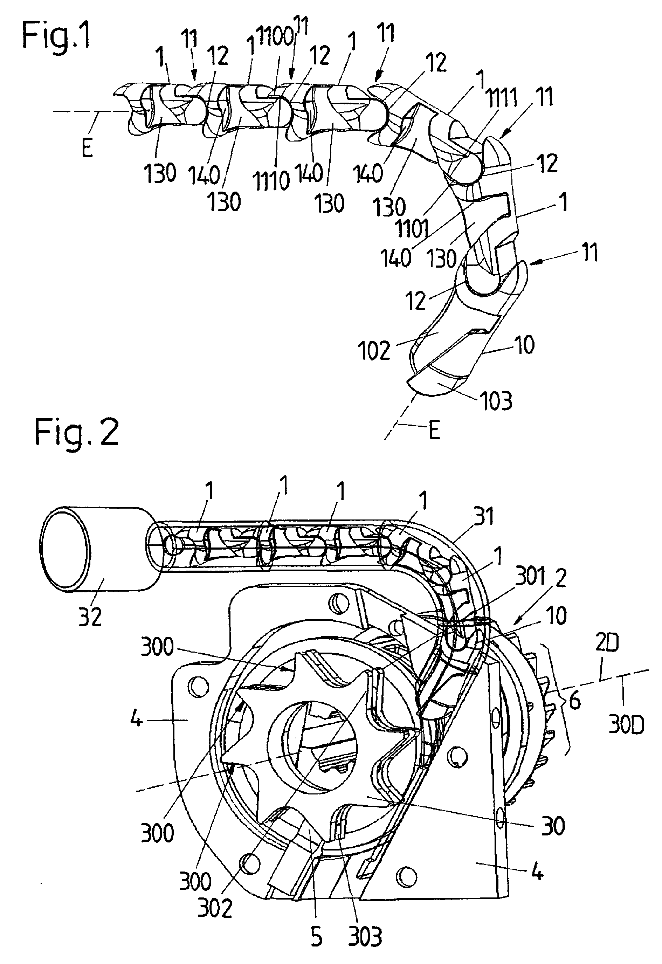

Figur 1 zeigt eine perspektivische Ansicht einer Antriebseinrichtung zur Erzeugung einer Gurtstraffbewegung in einer Sicherheitsgurtvorrichtung. Diese Antriebseinrichtung ist aus einer Mehrzahl hintereinander angeordneter, im Wesentlichen identisch ausgebildeter Antriebselemente 1 und einem im Vergleich zu den übrigen Antriebselementen 1 etwas abweichend ausgebildeten ersten Antriebselement 10 aufgebaut. Die Antriebselemente 1,10 sind hintereinander entlang einer Erstreckungsrichtung E aufgereiht. Die Erstreckungsrichtung E verläuft dabei abschnittsweise geradlinig und abschnittsweise gekrümmt. Dadurch, dass alle Antriebselemente 1,10 über Gelenkeinrichtungen 11 miteinander gekoppelt sind, lässt sich der gesamte Strang der Antriebselemente 1,10 in Abhängigkeit von der Funktionalität der Gelenkeinrichtungen 11 krümmen.

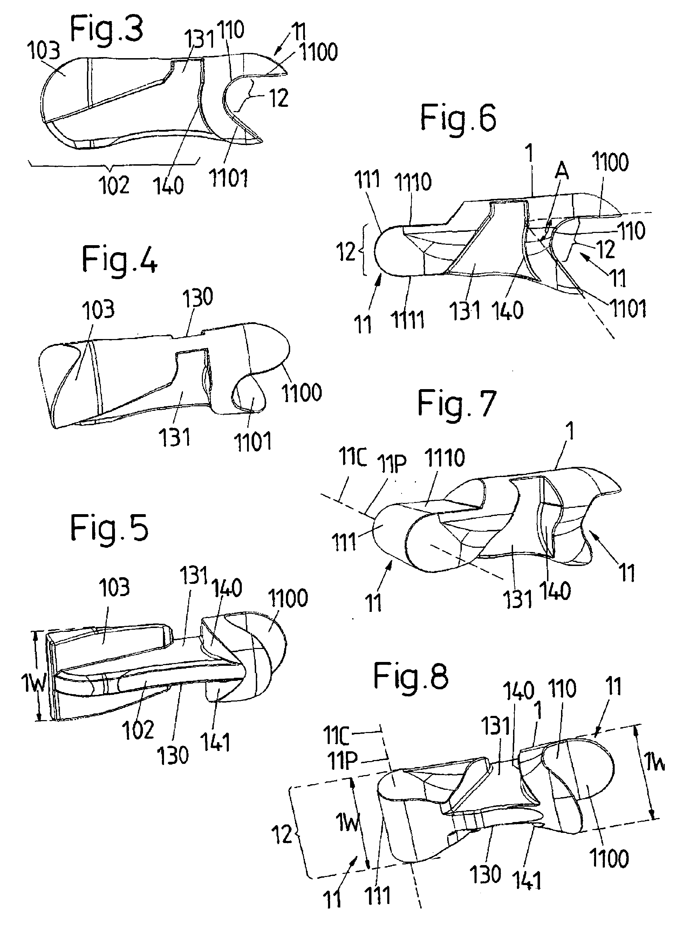

Eines der im Wesentlichen identisch aufgebauten Antriebselemente 1 ist in den Figuren 6 bis 8 in verschiedenen Ansichten im Detail dargestellt. Jedes Antriebselement 1 verjüngt sich zwischen breiter ausgebildeten Endabschnitten in einem rechtsseitigen Rücksprung 130 und in einem linksseitigen Rücksprung 131. Der rechtsseitige Rücksprung 130 und der linksseitige Rücksprung 131 sind dabei im Wesentlichen spiegelsymmetrisch zu einer durch die Erstreckungsrichtung verlaufenden Spiegelebene ausgebildet. Beide Endabschnitte des Antriebselementes 1 weisen je eine Gelenkeinrichtung 11 auf. Die eine Gelenkeinrichtung 11 ist in Form einer konvex um eine Raumrichtung 11C gewölbte Gelenkfläche 111 vorgesehen. Die gewölbte Gelenkfläche 111 entspricht dabei im Wesentlichen einer halben Zylindermantelfläche. Dazu entsprechend weist die konkav geformte Aufnahmefläche 110 einen ebenfalls als Abschnitt eines Zylindermantels ausgeformten Aufnahmebereich auf. Dieser Aufnahmebereich weist eine derartige Krümmung auf, dass sich die gewölbte Gelenkfläche 111 eines benachbart angeordneten Antriebselementes 1 im Aufnahmebereich im Wesentlichen formschlüssig abrollen lässt. Dabei sind die beiden benachbart angeordneten Antriebselemente 1 um die in diesem Ausführungsbeispiel übereinander liegende Schwenkachse 11 P und die Raumrichtung 11C der Wölbung verschwenkbar.

An ihren Endabschnitten geht die konkave Gelenkaufnahme 111 in einen oberen Aufnahmeschenkel 1100 und in einen unteren Aufnahmeschenkel 1101 über. Der obere Aufnahmeschenkel 1100 und der untere
Aufnahmeschenkel 1101 sind jeweils als ebene Flächen ausgebildet, die in stetiger Weise in die als Zylindermantelabschnitt ausgeformte konkave Aufnahmefläche 110 übergehen. Insofern schließen die beiden Aufnahmeschenkel 1101, 1100 quer zur Erstreckungsrichtung E betrachtet einen in diesem Ausführungsbeispiel spitzen Gelenköffnungswinkel A ein. Selbstverständlich ist auch ein stumpfer Gelenköffnungswinkel denkbar. Je größer der Gelenköffnungswinkel A, desto größer ist der Verschwenkbereich zwischen benachbarten Antriebselementen 1. Für das vorliegende Ausführungsbeispiel ist der Gelenköffnungswinkel A identisch zum maximalen Verschwenkwinkel benachbarter Antriebselemente 1. Dies liegt darin begründet, dass die konvexe Gelenkfläche 111 an ihren beiden Endabschnitten in stetiger Weise in eine obere Gelenkauflage 1110 und in eine untere Gelenkauflage 1111 übergehen. Die obere Gelenkauflage 1110 und die untere Gelenkauflage 1111 sind als ebene Flächen ausgebildet, die im Wesentlichen parallel zueinander ausgerichtet sind. In Figur 1 ist zu erkennen, dass bei einem geradlinigen Verlauf der aneinander gekoppelten Antriebselemente 1 die obere Gelenkauflage 1110 und der obere Aufnahmeschenkel 1100 aufeinander zu liegen kommen. Bei den weiter rechts in der Figur 1 dargestellten maximal zueinander verschwenkten Antriebselementen 1 kommt entsprechend die untere Gelenkauflage 1111 auf dem unteren Aufnahmeschenkel 1101 zu liegen. Die Anordnung und die Ausgestaltung der Aufnahmeschenkel 1100,1101 und der Gelenkauflagen 1110,1111 der Gelenkeinrichtungen 11 geben somit die Randbedingungen für das Verschwenken der Antriebselemente 1 zueinander vor. Die konkave Aufnahmefläche 110 und die konvexe Gelenkfläche 111 dienen bei der mechanischen Kopplung der Antriebselemente 1 zumindest abschnittsweise als Kraftübertragungsbereiche 12 zur Übertragung einer Schubkraft zwischen benachbarten Antriebselementen 1. Die Gelenkeinrichtungen 11 dieses Ausführungsbeispiels sind hier derart ausgebildet, dass sich die Kraftübertragungsbereiche 12 über die gesamte Antriebselementbreite 1 W erstrecken.

Der Grenzbereich der rechtsseitigen Rücksprünge 130 und entsprechend spiegelsymmetrisch der Grenzbereich der linksseitigen Rücksprünge 131 zur benachbarten Gelenkeinrichtung 11 ist als rechtsseitiger Antriebsbereich 140 bzw. als dazu spiegelsymmetrischer linksseitiger Antriebsbereich 141 ausgebildet. Diese Antriebsbereiche 140,141 verlaufen quer zur Erstreckungsrichtung E der Antriebselemente 1 und sie sind für die mechanische Kopplung der Antriebselemente 1 zur Erzeugung einer Gurtstraffbewegung in einer Sicherheitsgurtvorrichtung vorgesehen, was im Folgenden noch näher erläutert wird.

In Figur 2 ist die Antriebseinrichtung aus Figur 1 als Bestandteil einer Sicherheitsgurtvorrichtung dargestellt. Die Sicherheitsgurtvorrichtung ist aus Gründen der Übersichtlichkeit nicht vollständig dargestellt. Die Antriebseinrichtung aus Figur 1 befindet sich in einem als Rohr ausgebildeten Führungskanal 31. Der Führungskanal 31 weist einen der Querschnittsfläche der Gelenkeinrichtungen 11 im Wesentlichen entsprechenden Querschnitt auf. Dadurch ist weitestgehend vermieden, dass die bei der Zündung einer beispielsweise pyrotechnisch ausgebildeten Beschleunigungseinrichtung 32 frei werdenden Gase beim Beschleunigen der im Führungskanal 31 angeordneten Antriebselemente 1 an diesen vorbei strömen, ohne ihre kinetische Energie an die Antriebseinrichtung abzugeben. Die Krümmung des Führungskanals 32 ist an die durch den Gelenköffnungswinkel A maximal ermöglichte Verschwenkbarkeit der Antriebselemente 1 angepasst.

Die Sicherheitsgurtvorrichtung umfasst weiterhin eine Spule 2, die zum Aufwickeln und zum Abwickeln eines in Figur 2 nicht dargestellten Sicherheitsgurtes dient. Dazu ist die Spule 2 in einem ortsfest montierbaren Rahmenbauteil 4 um eine Spulendrehachse 2D drehbar gelagert. Koaxial zur Spulendrehachse 2D sind ein Antriebsrad 30 und ein Blockierzahnrad 6 angeordnet. Die Spule 2 der hier dargestellten Sicherheitsgurtvorrichtung weist eine so genannte schwimmende Lagerung der Spulendrehachse 2D auf. Überschreitet die Winkelbeschleunigung bei einer Rotation der Spule 2 in Abwickelrichtung oder die Raumbeschleunigung der gesamten Sicherheitsgurtvorrichtung einen definierten Grenzwert, so wird eine weitere Rotationsbewegung der Spule durch einen hier nicht dargestellten Mechanismus blockiert. Durch die am Sicherheitsgurt angreifende Zugkraft kann sich dann die räumliche Lage der gesamten blockierten Spule 2 verlagern und dadurch kommen die Zähne des Blockierzahnrades 6 in Eingriff mit in Figur 2 nicht dargestellten ortsfest am Rahmenelement 4 angeordneten Blockierzähnen.

Diese Blockierzähne nehmen die am Gurt angreifende Zugkraft auf und ein weiteres Abwickeln des Sicherheitsgurtes ist auf diese Weise unterbunden.

Drehfest mit der Spule 2 verbunden ist das Antriebsrad 30. Für ein mechanisches Zusammenwirken des Antriebsrades 30 mit den Antriebselementen 1 der Antriebsvorrichtung ist das Antriebsrad 30 zweiteilig aufgebaut. Axial durch eine Aussparung 303 beabstandet weist das Antriebsrad 30 ein rechtsseitiges Teilrad 302 und ein linksseitiges Teilrad 301 auf. Die beiden Teilräder sind im Wesentlichen identisch ausgebildet und weisen jeweils entlang ihres Umfangs periodisch angeordnete Rücksprünge derart auf, dass die beiden Teilräder 301,302 als Zahnräder ausgebildet sind. Bevorzugt sind die beiden Teilräder 301,302 als Abschnitte eines einstückig ausgebildeten Antriebsrades 30 ausgeführt. Es ist besonders vorteilhaft, die Spule und das Antriebsrad 30 aus einer einzigen Gussform herzustellen.

Wird nach dem Erkennen einer Unfallsituation die Beschleunigungseinrichtung 32 gezündet, beschleunigt diese anschließend die Antriebseinrichtung mit den über die Kraftübertragungsbereiche 12 der Gelenkeinrichtungen 11 mechanisch miteinander gekoppelten Antriebselementen 1. In Schubrichtung stellt die Antriebseinrichtung einen durch die Krümmung des Führungskanals 31 einer Zwangsführung unterliegenden Strang an Antriebselementen 1 dar.

Wie in Figur 1 zu erkennen ist, weist das erste Antriebselement 10 einen sich entlang der Erstreckungsrichtung E verlaufenden schwertartig angefasten Einkuppelabschnitt 102 und einen dazu benachbart angeordneten Schubabschnitt 103 auf. In den Figuren 3 bis 5 ist das erste Antriebselement 10 detailliert in verschiedenen Ansichten dargestellt. Anders als die in den Figuren 6 bis 8 gezeigten Antriebselemente 1 ist bei dem ersten Antriebselement nur an einem Ende eine Gelenkeinrichtung 11 vorgesehen. Diese Gelenkeinrichtung 11 ist mit einer konkaven Gelenkfläche 111 im Wesentlichen identisch zur entsprechenden Gelenkeinrichtung 11 der in Figur 6 bis 8 gezeigten Antriebselemente 1 ausgebildet. Gleiche Bezugszeichen sind für gleiche Abschnitte der Gelenkeinrichtung 11 verwendet. Die zugehörigen Ausführungen im Zusammenhang mit der Antriebseinrichtung 1 gelten für die Gelenkeinrichtung 11 des ersten Antriebselementes 10 entsprechend.

Anders als bei den zugehörigen Antriebselementen 1 ist das erste Antriebselement 10 im Frontbereich mit einem Schubabschnitt 103 ausgebildet, der sich über die gesamte Antriebselementbreite 1 W erstreckt. Dieser Schubabschnitt 103 erstreckt sich im Wesentlichen im oberen Bereich des ersten Antriebselementes 10, wobei sich nach unten hin das erste Antriebselement 10 in einen schwertartig angefasten Einkuppelabschnitt 102 verjüngt.

Die beschleunigte Antriebseinrichtung trifft somit als erstes mit dem Schubabschnitt 103 des ersten Antriebselementes 10 auf einen Zahn des Antriebsrades 30 und beginnt dadurch die Spule 2 in Aufwickelrichtung in Rotation zu versetzen. Dabei gleitet der Zahn des Antriebsrades 30 mit zunehmender Rotation der Spule 2 immer weiter nach innen in Richtung des schwertartigen Einkuppelabschnitts 102, bis schließlich der Einkuppelabschnitt 102 in die Aussparung 303 zwischen dem ersten Teilrad 301 und dem zweiten Teilrad 302 einfädelt. Dadurch ist eine laterale Führung des ersten Antriebselementes 10 im Antriebsrad 30 hergestellt. Der rechtsseitige Antriebsbereich 140 und der linksseitige Antriebsbereich 141 treten jeweils in Kontakt mit zugeordneten Antriebsbereichen 300 des Antriebsrades 30. Dadurch kann kinetische Energie der Antriebseinrichtung auf die Spule 2 übertragen werden. Die folgenden Antriebselemente 1 sind in ihren Abmessungen entlang der Erstreckungsrichtung E derart ausgebildet, dass jedes nachfolgende Antriebselement 1 mit einem Antriebsbereich 300 eines Zahnes des Antriebsrades 30 mechanisch koppelt.

Damit sich die Antriebselemente 1 nach dem Einkuppeln nicht um die Spule 2 herumwickeln, ist ein Auskupplungsschwert 5 vorgesehen, das in die Aussparung zwischen den beiden Teilrädern 301,302 eingreift und die Antriebselemente einem in Figur 2 nicht gezeigten Auffangbehälter zuführt.

Die in Figur 2 schematisch dargestellte Sicherheitsgurtvorrichtung mit einer schwimmend gelagerten Spulendrehachse 2D kann sowohl mit einem einseitig angetriebenen Straffmechanismus als auch mit doppelseitig angetriebenem Straff mechanismus ausgebildet sein. Bei doppelseitig angetriebenem Straffmechanismus ist es vorteilhaft, dass nur eine einzige Beschleunigungseinrichtung eingesetzt wird, die beide Antriebseinrichtungen beschleunigt.

Die in Figur 1 dargestellte Antriebseinrichtung stellt ein mögliches Ausführungsbeispiel einer ersten Ausführungsform aus einer so genannten ersten Gruppe der Antriebseinrichtung dar. Sämtliche Antriebseinrichtungen der ersten Gruppe zeichnen sich dadurch aus, dass der Kraftübertragungsbereich 12 entlang der gesamte Antriebselementbreite 1W verläuft. Sämtliche Antriebseinrichtungen der ersten Ausführungsform aus der ersten Gruppe der Antriebseinrichtungen haben die Eigenschaft gemeinsam, dass die Antriebselemente 1,10 mit dem vorangehend beschriebenen mehrteiligen Antriebsrad 30 zusammenwirken. Das heißt bei einem symmetrisch zweiteiligen Antriebsrad 30 sind alle Antriebselemente 1,10 entlang der Erstreckungsrichtung E betrachtet mit rechtsseitigen Antriebsbereichen 140 und linksseitigen Antriebsbereichen 141 spiegelsymmetrisch aufgebaut.

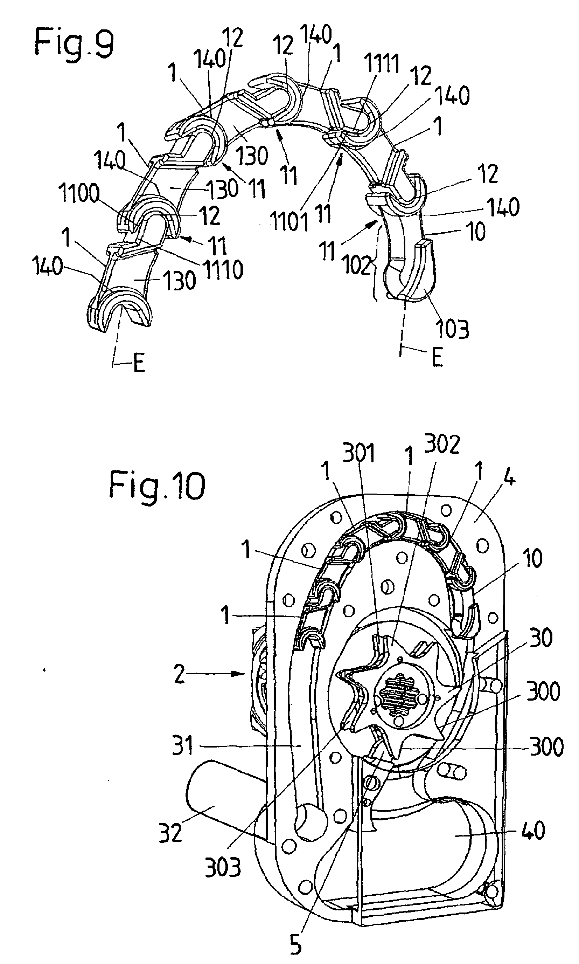

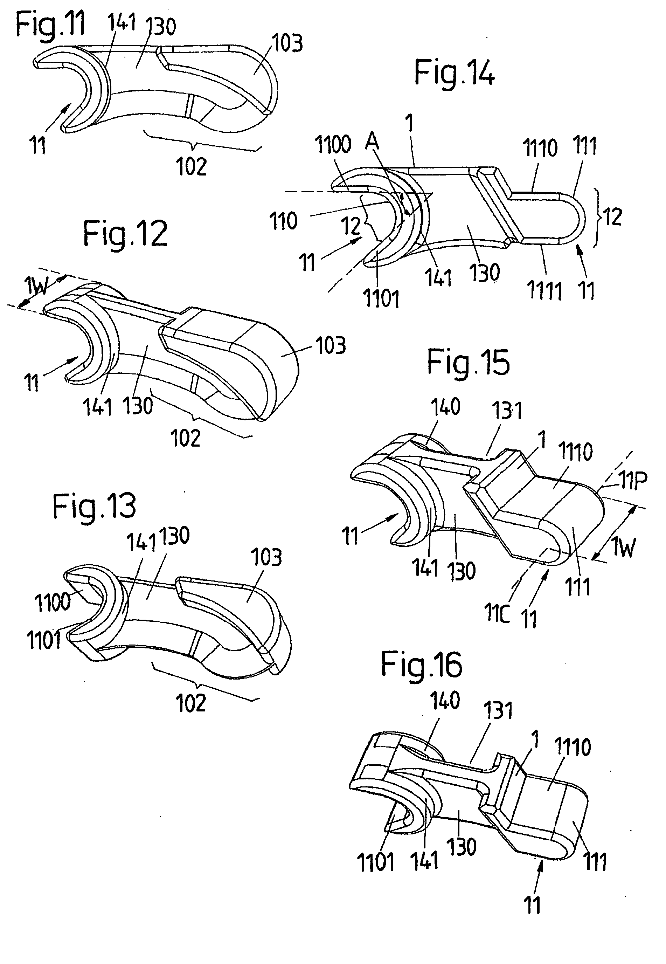

Ein zweites Ausführungsbeispiel einer Antriebseinrichtung ist in Figur 9 in einer perspektivischen Ansicht dargestellt. Weiterhin zeigen die Figuren 11 bis 13 das zugehörige erste Antriebselement 10 und die Figuren 14 bis 16 die Antriebselemente 1 in verschiedenen Perspektiven.

Diese Antriebseinrichtung mit ihren Antriebselementen 1 und dem einen ersten Antriebselement 10 ist sehr ähnlich zu der in Figur 1 bzw. den Figuren 3 bis 8 gezeigten Antriebseinrichtung ausgebildet. Gleiche Abschnitte der Bauelemente sind daher mit gleichen Bezugszeichen versehen. Um Wiederholungen zu vermeiden, wird auf die vorangehenden Ausführungen verwiesen und die nachfolgende Beschreibung auf die bestehenden Unterschiede fokussiert.

Aus den detaillierten Darstellungen der Figuren 11 bis 16 der Antriebselemente 1,10 wird deutlich, dass diese keinen runden oder ovalen sondern einen im Wesentlichen rechteckigen Querschnitt aufweisen. Folglich muss auch der zugehörige Führungskanal 31 mit einer entsprechenden Querschnittskontur ausgeführt sein. Die rechteckige Form erlaubt es, die gesamte Sicherheitsgurtvorrichtung in axialer Richtung schlanker auszuführen. Außerdem ist es möglich, den Führungskanal 32 auf einfache Weise in flächige Rahmenbauteile 4 zu integrieren. In Figur 10 ist die Sicherheitsgurtvorrichtung mit einem Aufnahmebehälter 40 zum Auffangen von Antriebselementen 1 dargestellt. Auch diese Variante der Sicherheitsgurtvorrichtung lässt sich mit einseitigem oder beidseitigem Straffmechanismus ausbilden.

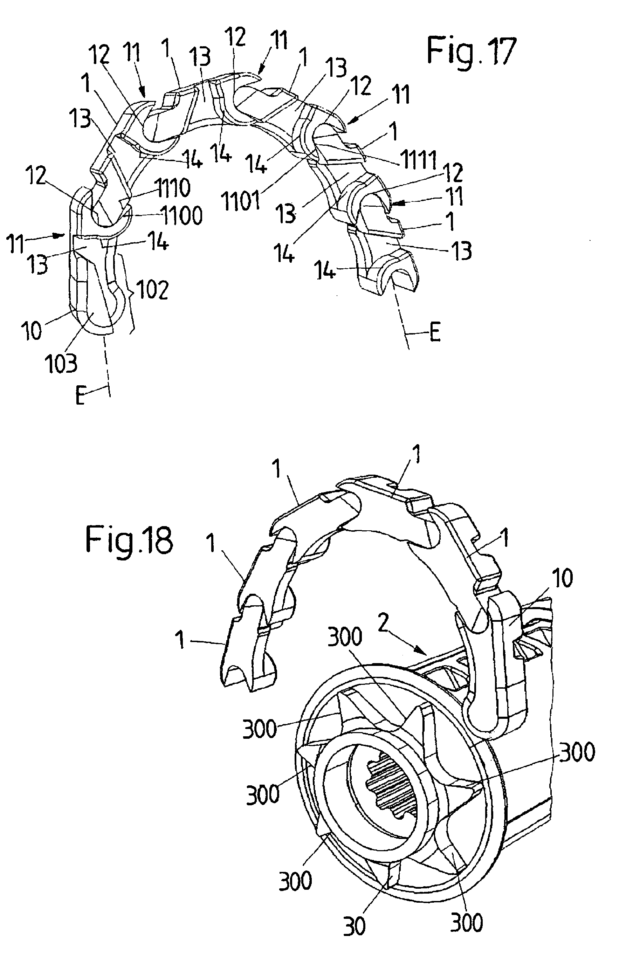

Figur 17 zeigt eine perspektivische Ansicht der Antriebseinrichtung. Dabei handelt es sich um eine erste Variante aus der ersten Gruppe der Antriebseinrichtungen. Alle Varianten zeichnen sich dadurch aus, dass jedes Antriebselement 1,10 entlang der Erstreckungsrichtung E betrachtet nur auf einer Seite der Elemente Rücksprünge 13 mit Antriebsbereichen 14 für den Eingriff in ein Antriebsrad 30 einer Sicherheitsgurtvorrichtung aufweist

Die in Figur 17 in Einzeldarstellung gezeigte Antriebseinrichtung entspricht auf den ersten Blick einer gespiegelten Darstellung der in Figur 9 gezeigten Antriebseinrichtung. Gleiche Bereiche der Bauelemente sind daher mit gleichen Bezugszeichen versehen. Es wird betont, dass die vorangehenden Ausführungen entsprechend gelten und nur zur Vermeidung von Wiederholungen nicht nochmals aufgegriffen werden. An Stelle der Figur 9 dargestellten rechtsseitigen Rücksprünge 130 mit rechtsseitigen Antriebsbereichen 140 sind Rücksprünge 13 mit Antriebsbereichen 14 dargestellt.

Aus der Darstellung in Figur 18, die Antriebseinrichtung als zusammen mit einer passenden Spule einer Sicherheitsgurtvorrichtung zeigt, wird der Unterschied deutlich. Alle Antriebselemente 1,10 weisen eine flächig glatte Rückseite auf und können somit nur einseitig mit ihren Antriebsbereichen 14 in Eingriff mit einem Antriebsrad 30 einer Spule 2 treten. Dies bringt jedoch den Vorteil mit sich, dass das Antriebsrad 30 unmittelbar am Spulenkörper in formschlüssiger oder stoffschlüssiger Weise ausgebildet werden kann. Dadurch lässt sich die Sicherheitsgurtvorrichtung in axialer Richtung schlanker gestalten. Dieser Vorteil gilt jedoch ebenso für das einstückige Ausbilden eines Antriebsrades, das mit einer Mehrzahl von Teilrädern ausgebildet ist.

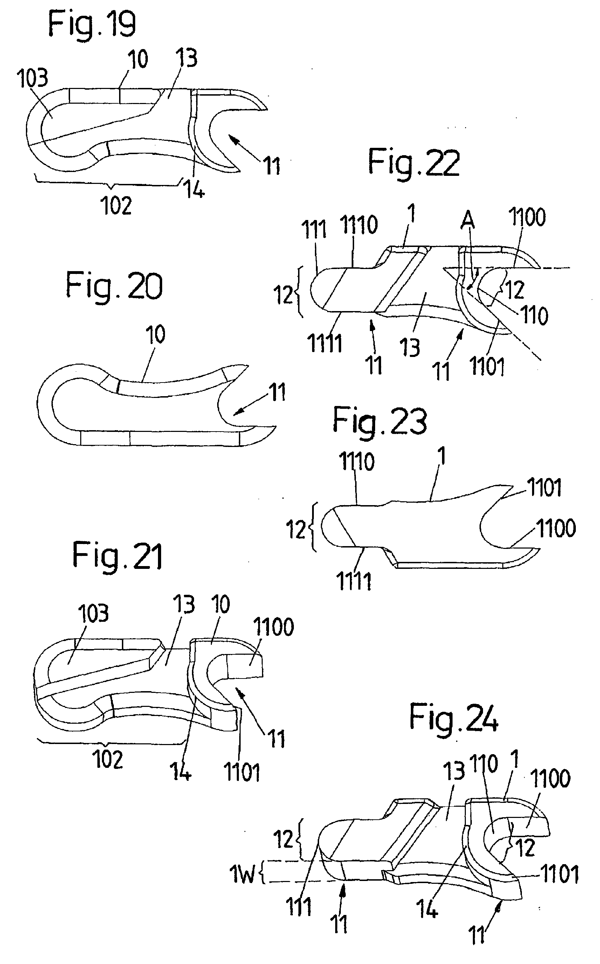

Die Figuren 19 bis 24 zeigen entsprechend den Darstellungen Details des ersten Antriebselements 10 und der übrigen Antriebselemente 1 in verschiedenen Ansichten. Gleiche Abschnitte der Elemente sind wiederum mit gleichen Bezugszeichen versehen. Auf die vorangehenden Erläuterungen wird verwiesen, um Wiederholungen zu vermeiden. Die Figuren 20 und 23 zeigen jeweils eine Ansicht der im Wesentlichen flach ausgebildeten Rückseite der ersten Variante einseitiger Antriebseinrichtung.

Diese Antriebseinrichtung kommt bevorzugt bei einer Sicherheitsgurtvorrichtung zum Einsatz, die nur auf einer Seite der Spule 2 einen Mechanismus zum Generieren einer Straffung vorsieht. Für eine zweiseitige Straffung müssten auf der anderen Seite der Spule 2 gespiegelt ausgebildete Antriebselemente 1,10 zum Einsatz kommen, um die Krümmung der Antriebselemente in Gegenrichtung zu ermöglichen.

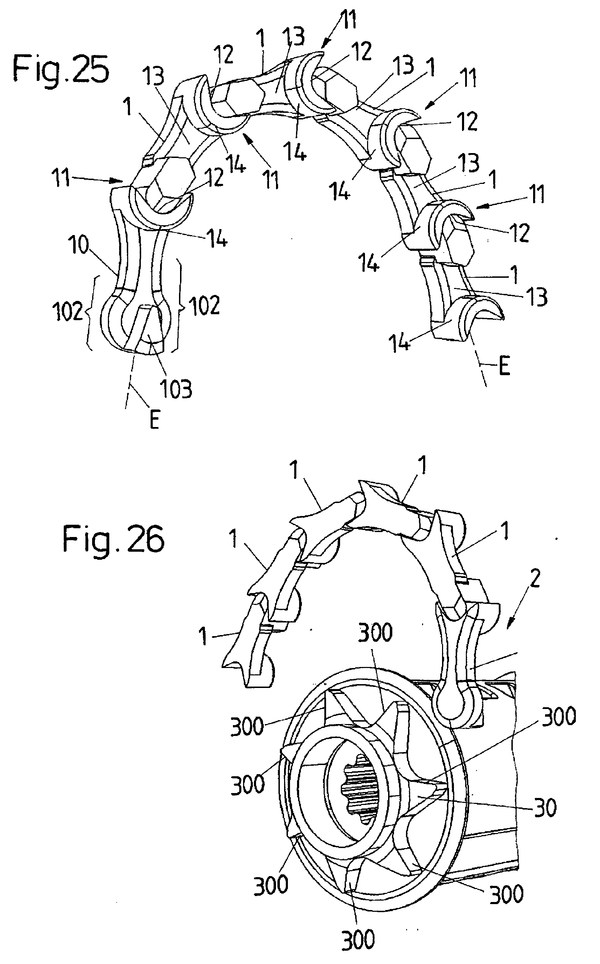

Figur 25 zeigt eine perspektivische Ansicht eines Ausführungsbeispiels der Antriebseinrichtung. Diese stellt eine zweite Variante (einseitig angeordnete Antriebsbereiche der Antriebselemente) aus der ersten Gruppe der Antriebseinrichtungen dar. Anders als bei allen bisherigen Varianten sind hier sämtliche Antriebselemente 1,10 spiegelsymmetrisch zu ihrer Längshochebene ausgebildet. Dadurch lassen sich die mechanisch miteinander gekoppelten Antriebselemente 1,10 sowohl links- als auch rechts herum gleichermaßen gut krümmen. So kann mit identisch ausgebildeten Antriebselementen 1,10 sowohl links- als auch rechtsseitig an einer Spule 2 eine Straffbewegung realisiert werden. Das in Figur 26 auf einer Seite der Spule 2 dargestellte Antriebsrad 30 lässt sich in axialer Richtung schlank ausbilden.

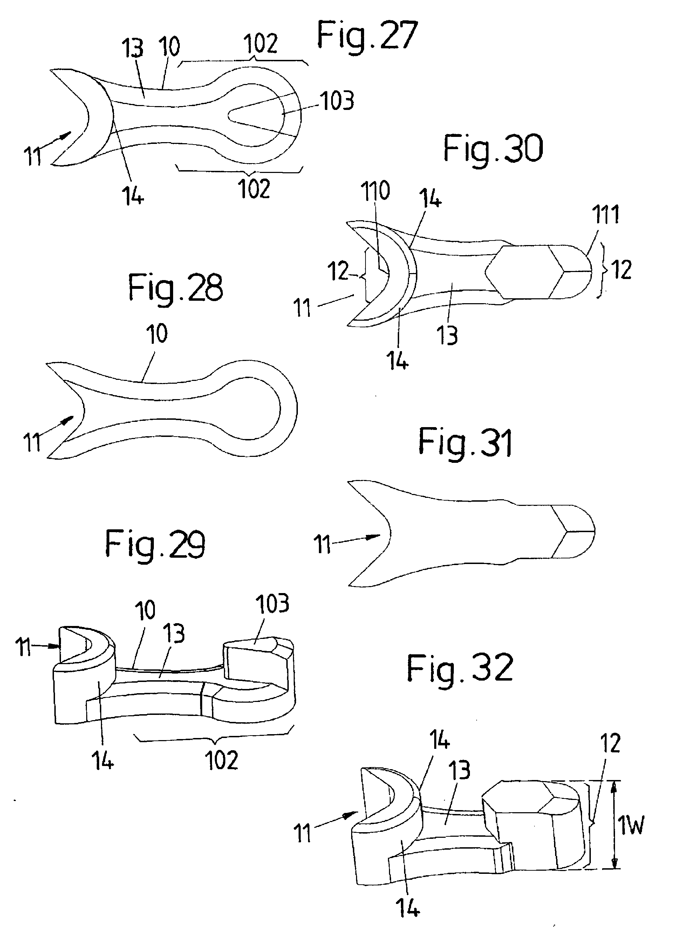

Die Figuren 27 bis 32 zeigen entsprechend den Antriebselement-Darstellungen das erste Antriebselement 10 und die nachfolgenden Antriebselemente 10 detailliert in verschiedenen Ansichten. Deutlich zu erkennen ist, dass die symmetrische Ausbildung der Gelenkeinrichtungen 11 die beidseitige Funktionalität gewährleistet.

Dadurch, dass die Antriebseinrichtung den vorangehend beschriebenen geschichteten Aufbau aufweist, ist es erforderlich an dem der Beschleunigungseinrichtung zugewandten Ende ein Antriebselement als Dichtungselement 20 auszuführen. Das in den vorangehenden Figuren dargestellte Dichtungselement erstreckt sich über die gesamte Breite, die vom Antriebselement eingenommen wird. Dadurch kann das Dichtungselement 20 die Querschnittsfläche des Führungskanals 31 voll ausfüllen. Folglich verhindert das Dichtungselement 20, dass beim Auslösen der Beschleunigungseinrichtung frei werdende Gase durch Spalten um die Antriebselemente strömen, ohne ihre kinetische Energie an die Antriebseinrichtung abzugeben.

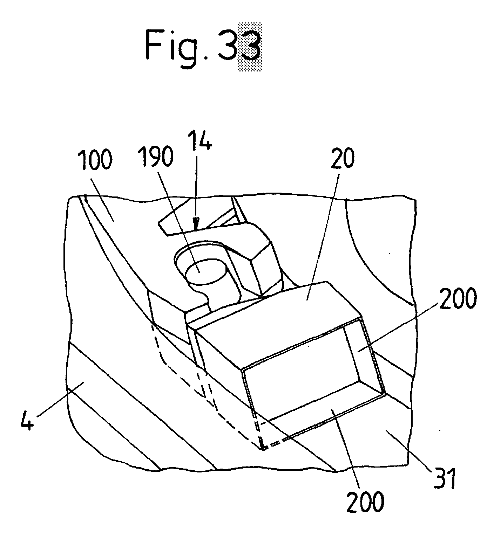

Eine alternative Ausbildung des Dichtungselementes 20 zeigt Figur 33. Dieses Dichtungselement 20 zeigt an seinem der Beschleunigungseinrichtung zugewandten Ende eine Endfläche. Diese Endfläche weist an ihrem äußeren Rand eine umlaufende Dichtungslippe 200 auf. Diese Dichtungslippe 200 liegt an der umlaufenden Wandung des Führungskanals 31 an. Von der Endfläche des Dichtungselementes 20 steigt die Dichtungslippe bevorzugt in einem stumpfen Winkel in Richtung der Wandung des Führungskanals 31 auf. Wenn der für das Dichtungselement 20 zum Einsatz kommende Werkstoff eine hinreichende Elastizität aufweist, sorgt die im stumpfen Winkel ansteigende Flanke dafür, dass auf diese Flanke prallende Gase der Beschleunigungseinrichtung die Dichtungslippe 200 in Richtung der Wandung des Führungskanals 31 auslenken und somit die Dichtungseigenschaften des Dichtungselementes 20 verstärken.

Für die Sicherheitsgurtvorrichtungen mit allen vorangehend beschriebenen Varianten gelten die folgenden Ausführungen:
Eine durch die Ausgestaltung der Gelenkeinrichtungen 11 und den Verlauf des Führungskanals 31 realisierte Krümmungsebene der Antriebseinrichtung muss nicht zwingend parallel zu der durch das Antriebsrad 30 definierten Antriebsradebene angeordnet sein. Es kann für das dynamische Einspulverhalten der Antriebselemente gerade von Vorteil sein, wenn die Krümmungsebene und die Antriebsradebene in einem spitzen Winkel zueinander verlaufen.

### Bezugszeichenliste:

| | | | | |
|---|---|---|---|---|
| Antriebselement | | | | 1 |
| | | rechtsseitiges Antriebselement | | 100 |
| | | linksseitiges Antriebselement | | 101 |
| | erstes Antriebselement | | | 10 |
| | | Einkuppelabschnitt | | 102 |
| | | Schubabschnitt | | 103 |
| | Antriebselementbreite | | | 1 W |
| | Gelenkeinrichtung | | | 11 |
| | | Gelenköffnungswinkel | | A |
| | | Aufnahmefläche | | 110 |
| | | | oberer Aufnahmeschenkel | 1100 |
| | | | unterer Aufnahmeschenkel | 1101 |
| | | Gelenkfläche | | 111 |
| | | | obere Gelenkauflage | 1110 |
| | | | untere Gelenkauflage | 1111 |
| | | Raumrichtung der Wölbung | | 11C |
| | | Schwenkachse | | 11 P |
| | Kraftübertragungsbereich | | | 12 |
| | Rücksprung (Verjüngung) | | | 13 |
| | | rechtsseitiger Rücksprung | | 130 |
| | | linksseitiger Rücksprung | | 131 |
| | Antriebsbereich des Antriebselementes | | | 14 |
| | | rechtsseitiger Antriebsbereich | | 140 |
| | | linksseitiger Antriebsbereich | | 141 |
| | | einseitiger Antriebsbereich | | 142 |
| | zylinderförmiger Grundkörper | | | 15 |
| | | Grundkörperdurchmesser | | 15D |
| | | Grundkörpermantelfläche | | 15M |
| | | Grundkörperbreite | | 15W |
| | Antriebskörper | | | 16 |
| | | rechtsseitiger Antriebskörper | | 160 |
| | | linksseitiger Antriebskörper | | 161 |
| | | einseitiger Antriebskörper | | 162 |
| Erstreckungsrichtung der Antriebseinrichtung | | | | E |
| | Dichtungselement | | | 20 |
| | | Dichtungslippen | | 200 |
| Spule | | | | 2 |
| | Drehachse der Spule | | | 2D |
| Sicherheitsgurt | | | | B |
| Straffeinrichtung | | | | 3 |
| | Antriebsrad | | | 30 |
| | | Drehachse des Antriebsrades | | 30D |
| | | Antriebsbereich des Antriebsrades | | 300 |
| | | linksseitiges Teilrad | | 301 |
| | | rechtsseitiges Teilrad | | 302 |
| | | Aussparung | | 303 |
| | Führungskanal | | | 31 |
| | Beschleunigungseinrichtung | | | 32 |
| Rahmenbauteil | | | | 4 |
| | Aufnahmebehälter | | | 40 |
| Auskupplungsschwert | | | | 5 |
| Blockierzahnrad | | | | 6 |

## Patentansprüche

1. Antriebseinrichtung zur Erzeugung einer Gurtstraftbewegung in einer Sicherheitsgurtvorrichtung umfassend eine Mehrzahl entlang einer Erstreckungsrichtung (E) aufgereihter Antriebselemente (1), wobei die Antriebselemente (1) an ihren Endabschnitten Gelenkeinrichtungen (11) aufweisen und entlang der Erstreckungsrichtung (E) benachbarte Antriebselemente (1) über ihre benachbarten Gelenkeinrichtungen (11) miteinander in mechanischer Wirkverbindung stehen, eine Mehrzahl von Gelenkeinrichtungen (11) in Form integraler Bestandteile der Antriebselemente (1) derart ausgebildet ist und einen quer zur Erstreckungsrichtung (E) orientierten Kraftübertragungsbereich (12) aufweist, dass sich bei einer Bewegung eines Antriebselementes (1) in Richtung eines benachbarten Antriebselementes (1) eine Schubkraft mittels des Kraftübertragungsbereichs (12) zumindest teilweise auf das benachbarte Antriebselement (1) überträgt und dass sich bei einer Bewegung eines Antriebselementes (1) weg von einem benachbarten Antriebselement (1) die benachbarten Gelenkeinrichtungen (11) voneinander lösen, **dadurch gekennzeichnet, dass** jede Gelenkeinrichtung (11) einen einzigen, zusammenhängenden Kraftübertragungsbereich (12) aufweist, sich der Kraftübertragungsbereich (12) im Wesentlichen entlang der gesamten Antriebselementbreite (1W) erstreckt, sich die Ausdehnung eines Antriebselementes (1) quer zur Erstreckungsrichtung (E) betrachtet zwischen den beiden Gelenkeinrichtungen (11) in einem Rücksprung (13) verjüngt, die Antriebselemente (1) auf der dem Rücksprung (13) gegenüber liegenden Seite im Wesentlichen flach ausgebildet sind und der Rücksprung (13) des Antriebselements (1) zwei Antriebsbereiche (14) umfasst, die spiegelsymmetrisch derart zueinander angeordnet sind, dass das Antriebselement (1) von zwei entgegengesetzten Richtungen aus betrachtet eine spiegelbildlich identische Struktur aufweist.

2. Antriebseinrichtung gemäß Anspruch 1, **dadurch gekennzeichnet, dass** der Kraftübertragungsbereich (12) als eine einzige zusammenhängende Linie oder als eine einzige zusammenhängende Oberfläche ausgebildet ist.

3. Antriebseinrichtung gemäß Anspruch 2, **dadurch gekennzeichnet, dass** die Antriebselemente (1) eine Antriebselementbreite (1W) quer zur Erstreckungsrichtung (E) der Antriebseinrichtung aufweisen und dass eine Mehrzahl von Antriebselementen im Wesentlichen identisch ausgebildet sind.

4. Antriebseinrichtung gemäß Anspruch 1, **dadurch gekennzeichnet, dass** die Gelenkeinrichtung (11) an einem ersten Endabschnitt des Antriebselementes eine konkav ausgeformte Aufnahmefläche (110) und die Gelenkeinrichtung (111) an einem zweiten Endabschnitt des Antriebselementes eine konvex ausgeformte Gelenkfläche (111) derart aufweist, dass die konvexe Gelenkfläche (111) eines Antriebselementes in der konkaven Aufnahmefläche (110) eines benachbarten Antriebselementes (1) abrollt, wenn zumindest eines der mechanisch kontaktierten Antriebselemente (1) quer zur Erstreckungsrichtung E der Antriebseinrichtung verschwenkt.

5. Antriebseinrichtung gemäß Anspruch 4, **dadurch gekennzeichnet, dass** die konvexe Gelenkfläche (111) und die konkave Aufnahmefläche (110) ausschließlich um eine gleiche Raumrichtung quer zur Erstreckungsrichtung (E) der Antriebseinrichtung derart gewölbt sind, dass sich benachbarte Antriebselemente (1) um eine oder um mehrere parallel zur Raumrichtung orientierte Schwenkachsen (11 P) bewegen, wenn die Antriebselemente (1) zueinander verschwenken.

6. Antriebseinrichtung gemäß Anspruch 5, **dadurch gekennzeichnet, dass** die konvexe Gelenkfläche (111) und die konkave Aufnahmefläche (110) des Antriebselementes spiegelsymmetrisch zu einer Längsebene ausgebildet sind, die durch die Schwenkachse (11P) und durch die Erstreckungsrichtung (E) des Antriebselementes aufgespannt ist.

7. Antriebseinrichtung gemäß Anspruch 5 oder 6, **dadurch gekennzeichnet, dass** die konvexe Gelenkfläche (111) und die konkave Aufnahmefläche (110) jeweils Zylindermantelabschnitte aufweisen, insbesondere dass die Zylindermantelabschnitte einen im wesentlichen gleichen Krümmungsradius aufweisen.

8. Antriebseinrichtung gemäß einem der Ansprüche 1 oder 4 bis 7, **dadurch gekennzeichnet, dass** die Gelenkeinrichtungen (11) quer zur Erstreckungsrichtung der Antriebseinrichtung betrachtet einen im Wesentlichen runden oder ovalförmigen oder rechteckigen Querschnitt aufweisen.

9. Antriebseinrichtung gemäß Anspruch 1, **dadurch gekennzeichnet, dass** der Rücksprung (13) mindestens einen Antriebsbereich (14) des Antriebselementes aufweist, wobei der Antriebsbereich (14) des Antriebselementes zum mechanischen Zusammenwirken mit mindestens einem korrespondierenden Antriebsbereich (300) eines Antriebsrades (30) einer Sicherheitsgurtvorrichtung dient.

10. Antriebseinrichtung gemäß Anspruch 9, **dadurch gekennzeichnet, dass** zusätzlich zu einem rechtsseitigen Rücksprung (130) mit rechtsseitigen Antriebsbereichen (140) auf der dem rechtsseitigen Rücksprung (130) gegenüberliegenden Seite des Antriebselementes (1) ein linksseitiger Rücksprung (131) mit linksseitigen Antriebsbereichen (141) vorgesehen ist.

11. Antriebseinrichtung gemäß Anspruch 10, **dadurch gekennzeichnet, dass** der rechtsseitige Rücksprung (130) im Wesentlichen spiegelsymmetrisch zum linksseitigen Rücksprung (131) ausgebildet ist.

12. Sicherheitsgurtvorrichtung mit
- einer um eine Drehachse (2D) rotierbare Spule (2) zum Aufwickeln und zum Abwickeln eines Sicherheitsgurtes (B), wobei die Position der Drehachse (2D) zwischen einer Blockierposition und einer Freigabeposition beweglich gelagert ist,
- einer Straffeinrichtung, mit welcher die Spule (2) während eines Straffvorgangs in einer Aufwickelrichtung des Sicherheitsgurts antreibbar ist, wobei die Straffeinrichtung (3) umfasst:
- ein mit der Drehachse (2D) der Spule in Wirkverbindung stehendes Antriebsrad (30) zum Antreiben der Spule (2) in Aufwickelrichtung, wobei das Antriebsrad (30) Antriebsbereiche (300) für eine mechanische Wechselwirkung mit den Antriebselementen (14) einer Antriebseinrichtung gemäß einem der Ansprüche 1 bis 11 aufweist,
- eine Antriebseinrichtung mit den Merkmalen gemäß einem der Ansprüche 1 bis 11 umfassend eine Mehrzahl von Antriebselementen (1),
- einen Führungskanal (31) durch den sich die Antriebselemente (1) in Richtung des Antriebsrades bewegen lassen und
- eine Beschleunigungseinrichtung zur Beschleunigung der Antriebselemente (1) beim Straffvorgang, dass die Antriebselemente (1) in einem beschleunigten Zustand kinetische Energie nach einem Einkupplungsvorgang an den Antriebsbereichen (300) des Antriebsrades in Rotationsenergie des Antriebsrades umsetzen.

13. Sicherheitsgurtvorrichtung gemäß Anspruch 12, **dadurch gekennzeichnet, dass** das Antriebsrad (30) einstückig mit der Spule (2) ausgebildet ist oder kraftschlüssig mit der Drehachse der Spule (2D) verbunden ist, insbesondere dass das Antriebsrad (30) Antriebsbereiche (300) in Form periodisch entlang des Antriebsradumfangs angeordneter Rücksprünge aufweist, wobei diese Antriebsbereiche (300) des Antriebsrades beim Straffvorgang mit den Antriebsbereichen (14) der Antriebselemente mechanisch zusammenwirken.

14. Sicherheitsgurtvorrichtung gemäß Anspruch 13, **dadurch gekennzeichnet, dass** das dem Antriebsrad (30) zugewandte erste Antriebselement (10) an seinem dem Antriebsrad (30) zugewandten Kopfabschnitt eine derartige Struktur aufweist, die ein Eingreifen des ersten Antriebselementes (10) und der nachfolgenden Antriebselemente (10) in die Antriebsbereiche (300) des Antriebsrades (30) unterstützt.

15. Sicherheitsgurtvorrichtung gemäß einem der Ansprüche 12 bis 14, **dadurch gekennzeichnet, dass** zwei Antriebsräder (30) vorgesehen sind, wobei jeder Endabschnitt der Spule (2) mit einem Antriebsrad (30) in Wirkverbindung steht, und dass zwei Führuhgskanäle (31) und zwei Antriebseinrichtungen aber nur eine Beschleunigungseinrichtung (32) für einen zweiseitigen Straffvorgang der Sicherheitsgurtvorrichtung vorgesehen sind.

16. Sicherheitsgurtvorrichtung gemäß einem der Ansprüche 12 bis 15, **dadurch gekennzeichnet, dass** die Straffeinrichtung (3) ein plattenförmiges Abschlusselement umfasst, welches an der der Spule abgewandten Seite des Antriebsrades (30) angeordnet ist und eine Wandung der Antriebsbereiche (300) des Antriebsrades (30) bildet.

## Claims

1. Drive device to generate a belt-tightening movement in a safety belt apparatus comprising a plurality of drive elements (1) lined up along an extension direction (E), wherein the drive elements (1) have on the end sections thereof, articulation devices (11) and along the extension direction (E), neighbouring drive elements (1) have a mechanical, operative connection with each other by means of their neighbouring articulation devices (11), a plurality of articulation devices (11) are designed in the form of integral constituents of the drive elements (1) and have a force transfer region (12) oriented transverse to the extension direction (E), so that during a movement of a drive element (1) in the direction of a neighbouring drive element (1), a shear force is transferred by means of the force transfer region (12) at least in part onto the neighbouring drive element (1), and that during a movement of one drive element (1) away from one neighbouring drive element (1), the neighbouring articulation devices (11) detach from one another, **characterised in that** each articulated device (11) has a single, cohesive force transfer region (12), the force transfer region (12) essentially extends along of entire drive element width (1W), the extension of a drive element (1) transverse to the extension direction (E) viewed between the two articulation devices (11) tapers into a groove (13), the drive elements (1) on the side opposite the groove (13) are essentially formed flat and the groove (13) of the drive element (1) has two drive regions (14) arranged in mirror symmetry to one another such that the drive element (1) viewed from two opposite directions has a mirror-image identical structure.

2. Drive device according to claim 1, **characterised in that** the force transfer region (12) is formed as a single cohesive line or as a single cohesive surface.

3. Drive device according to claim 2, **characterised in that** the drive elements (1) have a drive element width (1W) transverse to the extension direction (E) of the drive device and that a plurality of drive elements are essentially formed identically.

4. Drive device according to claim 1, **characterised in that** the articulation device (11) has, at a first end section of the drive element, a concave receiving surface (110) and the articulation device (111), at a second end section of the drive element, has a convex articulated surface (111) such that the convex articulated surface (111) of a drive element unrolls in the concave receiving surface (110) of a neighbouring drive element (1) if at least one of the mechanically contacted drive elements (1) pivots transversely to the extension direction E of the drive device.

5. Drive device according to claim 4, **characterised in that** the convex articulated surface (111) and the concave receiving surface (110) are exclusively curved about an identical spatial direction transverse to the extension direction (E) of the drive device such that neighbouring drive elements (1) move about one or several pivoting axes (11 P) oriented parallel to the spatial direction if the drive elements (1) pivot towards one another.

6. Drive device according to claim 5, **characterised in that** the convex articulated surface (111) and the concave receiving surface (110) of the drive element are formed in mirror symmetry to a longitudinal plane which is clamped through the pivot axis (11P) and through the extension direction (E) of the drive element.

7. Drive device according to claim 5 or 6, **characterised in that** the convex articulated surface (111) and the concave receiving surface (110) each have cylinder surface sections, in particular that the cylinder surface sections have an essentially identical radius of curvature.

8. Drive device according to one of the claims 1 or 4 to 7, **characterised in that** the articulation devices (11), viewed transverse to the extension direction of the drive device, have an essentially round or oval-shaped or rectangular cross-section.

9. Drive device according to claim 1, **characterised in that** the groove (13) has at least one drive region (14) of the drive element, wherein the drive region (14) of the drive element serves to mechanically interact with at least one corresponding drive region (300) of a drive wheel (30) of a safety belt apparatus.

10. Drive device according to claim 9, **characterised in that**, in addition to a right-hand side groove (130) with right-hand side regions (140), a left-hand side drive groove (131) with left-hand side drive regions (141) is provided on the side of the drive element (1) opposite the right-hand side groove (130).

11. Drive device according to claim 10, **characterised in that** the right-hand side groove (130) is essentially in mirror symmetry to the left-hand side groove (131).

12. Safety belt apparatus with
- a spool (2) rotatable about a rotation axis (2D) for winding and unwinding a safety belt (B), wherein the position of the rotation axis (2D) is movably supported between a locking position and a release position,
- a tightening device with which the spool (2) can be driven during a tightening operation in a winding direction of the safety belt, wherein the tightening device (3) comprises:
- a drive wheel (30) operatively connected with the rotation axis (2D) of the spool, for driving the spool (2) in the winding direction, wherein the drive wheel (30) has drive regions (300) for a mechanical interaction with the drive elements (14) of a drive device according to one of the claims 1 to 11,
- a drive device with the features according to one of the claims 1 to 11 comprising a plurality of drive elements (1),
- a guide channel (31) through which the drive elements (1) can be moved in the direction of the drive wheel and
- an acceleration device for accelerating the drive elements (1) during the tightening operation, that the drive elements (1) in an accelerated state, after engaging in the drive regions (300) of the drive wheel, convert kinetic energy to rotational energy of the drive wheel.

13. Safety belt apparatus according to claim 12, **characterised in that** the drive wheel (30) is formed as one piece with the spool (2) or non-positively connected with the rotation axis of the spool (2D), in particular that the drive wheel (30) has drive regions (300) in the form of grooves periodically arranged along the drive wheel circumference, wherein these drive regions (300) of the drive wheel mechanically interact with the drive regions (14) of the drive elements during the tightening operation.

14. Safety belt apparatus according to claim 13, **characterised in that** the first drive element (10) facing the drive wheel (30) has, at its head section facing the drive wheel (30), a structure which supports the engaging of the first drive element (10) and of the subsequent drive elements (10) in the drive regions (300) of the drive wheel (30).

15. Safety belt apparatus according to one of the claims 12 to 14, **characterised in that** two drive wheels (30) are provided, wherein each end section of the spool (2) is operatively connected with a drive wheel (30), and that two guide channels (31) and two drive devices, but only one acceleration device (32) for a bilateral tightening operation of the safety belt apparatus, are provided.

16. Safety belt apparatus according to one of the claims 12 to 15, **characterised in that** the tightening device (3) comprises a plate-shaped terminating element which is arranged on the side of the drive wheel (30) facing away from the spool and forms a wall of the drive regions (300) of the drive wheel (30).

## Revendications

1. Dispositif d'entraînement pour exercer une tension de la sangle dans un système de ceinture de sécurité comprenant un grand nombre d'éléments d'entraînement (1) alignés le long d'une direction d'élongation (E), les éléments d'entraînement (1) présentant des dispositifs d'articulation (11) à leurs parties d'extrémités et des éléments d'entraînement (1) voisins coopérant en liaison active mécanique les uns avec les autres par l'intermédiaire de leurs dispositifs d'articulations voisins le long de la direction d'élongation, un grand nombre de dispositifs d'articulation (11) sous la forme d'éléments constitutifs intégrés dans les éléments d'entraînement (1) étant conçu de telle sorte et présentant un domaine de transmission de forces (12) orienté transversalement par rapport à la direction d'élongation (E), de sorte que pour un mouvement d'un élément d'entraînement (1) en direction d'un élément d'entraînement (1) voisin, une force de poussée se transmet au moins partiellement sur l'élément d'entraînement (1) voisin par l'intermédiaire du domaine de transmission de forces (12) et que, pour un mouvement d'éloignement d'un élément d'entraînement (1) d'un élément d'entraînement (1) voisin, les dispositifs d'articulation (11) voisins se désarticulent les uns des autres, **caractérisé en ce que** chaque dispositif d'articulation (11) présente un seul domaine de transmission de forces (12) qui lui est attribué, que le domaine de transmission de forces (12) s'étend dans les grandes lignes sur toute la largeur de l'élément d'entraînement (1W), que l'élongation d'un élément d'entraînement (1), vu transversalement par rapport à la direction d'élongation (E), provoque un rappel entre les deux dispositifs d'articulation (11) dans une partie en retrait (13), que les éléments d'entraînement (1) du côté situé en face d'une partie en retrait (13) sont dans l'ensemble de forme plane et que la partie en retrait (13) de l'élément d'entraînement (1) comprend deux zones d'entraînement (14) qui sont disposées symétriquement l'une par rapport à l'autre comme par rapport à un miroir de sorte que l'élément d'entraînement (1) présente une structure identique , comme une image dans un miroir, vu de deux directions opposées.

2. Dispositif d'entraînement selon la revendication 1 **caractérisé en ce que** le domaine de transmission de forces (12) est formé par une ligne cohérente unique ou une surface cohérente unique.

3. Dispositif d'entraînement selon la revendication 2 **caractérisé en ce que** les éléments d'entraînement (1) présentent une largeur d'élément d'entraînement (1W), transversalement par rapport à la direction d'élongation (E) du dispositif d'entraînement, et qu'un grand nombre d'éléments d'entraînement est dans l'ensemble formé de manière identique.

4. Dispositif d'entraînement selon la revendication 1 **caractérisé en ce que** le dispositif d'articulation (11) présente une surface de réception (110) de forme concave sur une première partie d'extrémité de l'élément d'entraînement et que le dispositif d'articulation (111) présente une surface d'articulation (111) de forme convexe dans une seconde partie d'extrémité de l'élément d'entraînement de sorte que la surface d'articulation (111) convexe d'un élément d'entraînement se dévide dans la surface de réception concave (110) d'un élément d'entraînement voisin (1) lorsqu'au moins l'un des éléments d'entraînement (1) en contact mécanique tourne transversalement par rapport à la direction d'élongation (E) du dispositif d'entraînement.

5. Dispositif d'entraînement selon la revendication 4 **caractérisé en ce que** la surface d'articulation (111) convexe et la surface de réception (110) concave sont bombées exclusivement dans une direction de l'espace identique, transversalement par rapport à la direction d'élongation (E) du dispositif d'entraînement, de sorte que des éléments d'entraînement (1) voisins se déplacent autour d'un ou de plusieurs axes de pivotement (11 P) orientés parallèlement à la direction de l'espace lorsque les éléments d'entraînement (1) pivotent les uns par rapport aux autres.

6. Dispositif d'entraînement selon la revendication 5 **caractérisé en ce que** la surface d'articulation (111) convexe et la surface de réception (110) concave de l'élément d'entraînement sont conçues de manière symétriques, comme par rapport à un miroir, par rapport à un plan longitudinal qui est supporté par l'axe de pivotement (11P) et la direction de l'élongation (E) de l'élément d'entraînement.

7. dispositif d'entraînement selon les revendications 5 ou 6 **caractérisé en ce que** la surface d'articulation (111) convexe et la surface de réception (110) concave présentent chacune des parties d'enveloppes de cylindres, en particulier que les parties d'enveloppes de cylindres présentent dans l'ensemble le même rayon de courbure.

8. Dispositif selon l'une des revendications 1 ou de 4 à 7 **caractérisé en ce que** les dispositifs d'articulation (11) présentent une section dans l'ensemble de forme ronde ou ovale ou rectangulaire, vu transversalement par rapport à la direction d'élongation du dispositif d'entraînement.

9. dispositif d'entraînement selon la revendication 1 **caractérisé en ce que** la partie en retrait (13) présente au moins une zone d'entraînement (14) de l'élément d'entraînement, la zone d'entraînement (14) de l'élément d'entraînement servant à la coopération mécanique avec au moins une zone d'entraînement (300) correspondante d'une roue d'entraînement (30) d'un dispositif d'une ceinture de sécurité.

10. Dispositif d'entraînement selon la revendication 9 **caractérisé en ce qu'**en supplément de la partie en retrait du côté droit (130) comprenant les zones d'entraînement du côté droit (140) de l'élément d'entraînement (1), une partie en retrait du côté gauche (131) comprenant des zones d'entraînement de côté gauche (141) est prévue sur le côté se situant en face.

11. Dispositif d'entraînement selon la revendication 10 **caractérisé en ce que** la partie en retrait du côté droit (130) est, dans l'ensemble, symétrique, comme par rapport à un miroir, à la partie en retrait du côté gauche (131).

12. Dispositif de ceinture de sécurité comprenant
- une bobine (2) en rotation autour d'un axe de rotation (2D) pour l'enroulement et le déroulement d'une ceinture de sécurité (B), la position de l'axe de rotation (2D) étant localisée, se déplaçant entre une position de blocage et une position de libération,
- un dispositif de mise sous tension grâce auquel la bobine (2) peut être entraînée pendant un processus de mise sous tension dans le déroulement de la ceinture de sécurité, le dispositif de mise sous tension (3) comprenant :
- une roue d'entraînement (30) en liaison fonctionnelle avec l'axe de rotation (2D) de la bobine pour l'entraînement de la bobine (2) dans la direction de l'enroulement, la roue d'entraînement (30) présentant des zones d'entraînement (300) pour une interaction mécanique avec les éléments d'entraînement (14) d'un dispositif d'entraînement selon l'une des revendications de 1 à 11,
- un dispositif d'entraînement comprenant les caractéristiques selon l'une des revendications de 1 à 11 comprenant un grand nombre d'éléments d'entraînement (1),
- un canal de guidage (31) dans lequel les éléments d'entraînement (1) peuvent se déplacer en direction de la roue d'entraînement et
- un dispositif d'accélération pour l'accélération des éléments d'entraînement (1) lors du processus de mise sous tension de sorte que les éléments d'entraînement transforment de l'énergie cinétique dans un état d'accélération en énergie de rotation de la roue d'entraînement après un processus d'engagement dans les zones d'entraînement (300).

13. Dispositif de ceinture de sécurité selon la revendication 12 **caractérisé en ce que** la roue d'entraînement (30) est en forme d'une seule pièce avec la bobine (2) ou est liée solidement à l'axe de rotation de la bobine (2D), en particulier, que la roue d'entraînement (30) présente des zones d'entraînement (300) disposées périodiquement le long du périmètre de la roue d'entraînement des parties en retrait, les zones d'entraînement (300) de la roue d'entraînement agissant ensemble mécaniquement avec les zones d'entraînement (14) des éléments d'entraînement lors du processus de mise sous tension.

14. Dispositif de ceinture de sécurité selon la revendication 13 **caractérisé en ce que** le premier élément d'entraînement (10) orienté vers la roue d'entraînement (30) présente une telle structure de sa partie frontale orientée vers la roue d'entraînement (30) qu'elle aide à un encliquetage du premier élément d'entraînement (10) et des éléments d'entraînement (10) suivants dans les zones d'entraînement (300) de la roue d'entraînement (30).

15. Dispositif de ceinture de sécurité selon l'une des revendications de 12 à 14 **caractérisé en ce que** deux roues d'entraînement (30) sont prévues, chaque partie d'extrémité de la bobine (2) étant en liaison fonctionnelle avec une roue d'entraînement (30) et que deux canaux de guidage (31) et deux dispositifs d'entraînement sont prévus, mais qu'un seul dispositif d'accélération (32) soit prévu pour un processus de mise sous tension des deux côtés du dispositif de ceinture de sécurité.

16. Dispositif de ceinture de sécurité selon l'une des revendications de 12 à 15 **caractérisé en ce que** le dispositif de mise sous tension (3) comprend un élément de terminaison en forme de plaque qui est disposé sur le côté opposé à la bobine de la roue d'entraînement (30) et forme une paroi pour les zones d'entraînement (300) de la roue d'entraînement (30).
